# EUROPEAN PATENT APPLICATION

(11) **EP 4 645 181 A1**
(43) Date of publication of application: **05.11.2025**
(21) Application number: 25168963.4
(22) Date of filing: 07.04.2025
(51) Int. Cl.: G06Q 10/06, G06F 21/62, G06Q 10/10, H04L 41/28

(54) **SYSTEMS AND METHODS FOR MANAGING TASK APPROVALS**

(30) Priority: 30.04.2024 US 202463640303 P; 16.08.2024 US 202418806954
(71) Applicant: Palantir Technologies Inc., Denver, CO 80202 (US)
(72) Inventor: AGRAWAL, Akshay, Jersey City (US); TAHERI, Alexander, Neptune Beach (US); CHAN, Hubert, Belmont (US); COOKE, Dylan, Hilton Head (US); VIEIRA COIMBRA, Felipe, London (GB); VERMA, Shubhangee, London (GB); CHRISTOFI, Pieris, London (GB); MUSTIÈRE, Paul, London (GB); WICKHAM, Jack, London (GB); ÖHRNER, Noah, London (GB); CARRAS, Katherine, Toronto (CA); BAKER, James, Maidenhead (GB); FINK, Robert, Munich (DE); MASSIE, Craig, London (GB)
(74) Representative: Jolliffe, Jack Louis

(57) **Abstract**

**In** some examples, systems and methods for managing task approvals are provided. An example method includes receiving a task identifier for a task that is requested to be approved, and one or more subtasks decomposed from the task, and generating a task request including a task request identifier. **In** some examples, the task request is associated with the task, the task request identifier corresponds to the task identifier, and each subtask of the one or more subtasks of the task corresponds to one or more approval policies. **In** some examples, the method further includes: determining, for each subtask of the one or more subtasks of the task, whether the one or more approval policies are satisfied, in response to determining that, for each subtask of the one or more subtasks of the task, the one or more approval policies are satisfied, approving the task, and outputting an indication of the approval.

## Description

### CROSS REFERENCE TO RELATED APPLICATIONS

This application claims priority to U.S. Provisional Application No. 63/640,303, entitled "SYSTEMS AND METHODS FOR MANAGING TASK APPROVALS," and filed on April 30, 2024, and to U.S. Application No. 18/806,954, filed on August 16, 2024, both of which are incorporated by reference herein for all purposes in their entirety.

### TECHNICAL FIELD

Certain embodiments of the present disclosure relate to managing task approvals. More particularly, certain embodiments of the present disclosure relate to managing task approvals in computing environments based on approval policies.

### BACKGROUND

Approval software for computing environments can be used to improve cybersecurity. For example, the approval software can be used to define permissions for users to request that certain tasks to be performed by a computing device and permissions for such requests to ultimately be approved.

Hence, it is desirable to improve techniques for managing task approvals.

### SUMMARY

Certain embodiments of the present disclosure relate to managing task approvals. More particularly, certain embodiments of the present disclosure relate to managing task approvals in computing environments based on approval policies.

At least some aspects of the present disclosure are directed to a method for managing task approvals. In some examples, the method includes receiving a task identifier for a task that is requested to be approved, and one or more subtasks decomposed from the task, and generating a task request including a task request identifier. In some examples, the task request is associated with the task, the task request identifier corresponds to the task identifier, and each subtask of the one or more subtasks of the task corresponds to one or more approval policies. In some examples, the method further includes: determining, for each subtask of the one or more subtasks of the task, whether the one or more approval policies are satisfied, in response to determining that, for each subtask of the one or more subtasks of the task, the one or more approval policies are satisfied, approving the task, and outputting an indication of the approval. In some examples, the method is performed by one or more processors.

At least some aspects of the present disclosure are directed to a system for managing task approvals. In some examples, the system includes one or more processors, and one or more memories that, when executed by the one or more processors, cause the system to perform a set of operations. In some examples, the set of operations include receiving a task identifier for a task that is requested to be approved, and one or more subtasks decomposed from the task, and generating a task request including a task request identifier. In some examples, the task request is associated with the task, the task request identifier corresponds to the task identifier, and each subtask of the one or more subtasks of the task corresponds to one or more approval policies. In some examples, the set of operations further includes: determining, for each subtask of the one or more subtasks of the task, whether the one or more approval policies are satisfied, in response to determining that, for each subtask of the one or more subtasks of the task, the one or more approval policies are satisfied, approving the task, and outputting an indication of the approval.

At least some aspects of the present disclosure are directed to a method for managing task approvals. In some examples, the method includes receiving, by a service application, one or more task arguments for a task that is requested to be approved, and generating a task identifier for the task. In some examples, the task identifier corresponds to the one or more task arguments. In some examples, the method further includes decomposing the task into one or more subtasks, and generating a task request including a task request identifier. In some examples, the task request is associated with the task, the task request identifier corresponds to the task identifier, and each subtask of the one or more subtasks of the task correspond to one or more approval policies. In some examples, the method further includes determining, for each subtask of the one or more subtasks of the task, whether the one or more approval policies are satisfied, in response to determining that, for each subtask of the one or more subtasks of the task, the one or more approval policies are satisfied, approving the task, and in response to the approving of the task, performing the task. In some examples, the method is performed by one or more processors.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

FIG. 1 illustrates a simplified diagram showing a method for managing task approvals, according to certain embodiments of the present disclosure.
FIG. 2 illustrates a simplified diagram showing a method for managing task approvals, according to certain embodiments of the present disclosure.
FIG. 3 illustrates an example system for managing task approvals, according to certain embodiments of the present disclosure.
FIG. 4 illustrates an example flow between a frontend application, service application, and approvals applications, according to certain embodiments of the present disclosure.
FIG. 5 illustrates an example flow between a frontend application, service application, and approvals applications, according to certain embodiments of the present disclosure.
FIG. 6 illustrates an example flow between a frontend application, service application, and approvals applications, according to certain embodiments of the present disclosure.
FIG. 7 illustrates example tasks and subtasks, according to certain embodiments of the present disclosure.
FIG. 8 illustrates a simplified diagram showing a computing system for managing task approvals, according to certain embodiments of the present disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any range within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods are very inefficient, in terms of time and computing resources, at managing approvals for certain tasks to be performed in computing environments. Such inefficiencies are even more prevalent with relatively complex data management systems. For example, conventional systems may use simple security hierarchies for approving tasks, such as checking whether a user has a requisite security level for performing the task. However, in complex systems with more granular permission data, a user may have to be granted multiple different types of permissions to have a requested task approved. Using conventional systems, navigating all of the multiple different types of permissions and requesting an administrator to update the multiple different types of permissions can be very difficult and inefficient (e.g., in terms of time and/or computing resources).

Various embodiments of the present disclosure can achieve benefits and/or improvements by a computing system for managing task approvals. In some embodiments, benefits include improved efficiency for performing tasks that require multiple different types of permissions. For example, the improved efficiency can include decomposing a task into subtasks and determining whether approval policies are satisfied at the subtask level. In some embodiments, benefits include improved cybersecurity for providing multiple degrees of permissions in a system, while still being able to efficiently determine whether a task satisfies the multiple degrees of permissions before being invoked (e.g., before the task is executed). In some embodiments, benefits include an improved user experience for requesters submitting requests for one or more tasks to be performed. In some embodiments, benefits include an improved user experience for reviewers reviewing requests for one or more tasks to be performed. Additional and/or alternative benefits should be recognized by those of ordinary skill in the art, at least in light of the teachings provided herein.

In some examples, it is common for people to have a need to perform an action via a computing system or to make a change within the computing system, but not be trusted to do so at a given time. In conventional systems, sometimes only a small group of people in an organization have the necessary permissions for certain actions to be taken, and everyone else contacts that small group of people to request changes, such as via email or an instant messaging service. In some examples, it is desirable for users to be able to propose the changes themselves, as part of their regular workflow, and have the change reviewed by someone else (e.g., by the small group of users that were previously reviewing the requests outside the platform). In some examples, for less sensitive actions reviews, could be submitted by peers, but while enforcing the four eyes principal. In some examples, the four eyes principle is a security concept that involves requiring the involvement of at least two individuals or two separate processes to authorize or complete a task. In some examples, request workflows are difficult to implement, especially in a microservice environment where business logic is spread across multiple codebases. In some examples, implementing request workflows requires a great deal of care and scrutiny because errors in the implementation may allow security permissions to be bypassed.

In some examples, techniques provided herein solve the problem of how to implement a task request/approval workflow in a microservice environment. In some examples, the workflow architecture is split between an approvals application, which reasons abstractly about requests, reviews, approval requirements and compliance requirements, and a domain-specific service application that integrates with the approvals application. In some examples, the service application reasons about specific changes requested by the user. In some examples, to interface between the approvals application and the service application, the service application represents requests in an abstract, high level, domain-independent format that allows the approvals application to compute the approval requirements, eligible reviewers, compliance requirements, and other properties of the task request. In some examples, the service application stores information about what a user requested, and the resources to which they are trying to make changes. In some examples, the approvals application computes and stores everything that the service application does not, to implement the task approval workflow. In some examples, the approvals application is a service which can reason about requests, reviews, approvals requests, etc., but can universally accept business logic from any other service.

In some examples, the approvals application makes it easy for any microservices to require other users' approval as part of their existing workflows, thereby making it easier to roll out new governance controls to parts of a platform. In some examples, to achieve this ease, the service application and/or the approvals application implement an abstract application programming interface (API), decomposing a requested action into a set of subtasks that are represented in a generic approvals format.

In some examples, the approvals application uses the generic subtask data to compute approval policies that apply to the request and/or to compute the users that are eligible to approve them. In some examples, integrating services (e.g., the service application) do not need to reason about who can or must approve a request, and policy management concerns (such as users configuring certain actions to require approval from multiple users) can be centralized within the approvals application. In some examples, the approvals application uses callbacks to retrieve the latest generic information about a request, as well as to notify the service application when the request has been approved so that the change can be applied. In some examples, the architecture described herein is flexible, and can allow other requirements, such as compliance checks to be performed via the approvals application, with minimal work needed by the service applications (e.g., integrating services).

In some examples, for a developer to integrate their service (e.g., a service application) with the approvals application, they add an API for users to submit a request. An endpoint (e.g., the service application) will enter information into its store about what the user is requesting, then call the approvals application to let it know about the request. In some examples, techniques provided herein include implementing callback APIs of an approval application. In some examples, a get task detail command and/or endpoint will load data from a store and convert the data into an approvals application generic subtask representation. In some examples, an invoke task command and/or endpoint will apply the changes that a user requested. In some examples, techniques provided herein include defining default approval requirements for a type of change, such as if the requested change does not map to existing changes that are already implemented elsewhere in a platform. In some examples, there is no need for a service application to compute who can approve the request to allow users to customize the approval requirements, or to implement a state machine to keep track of the request status.

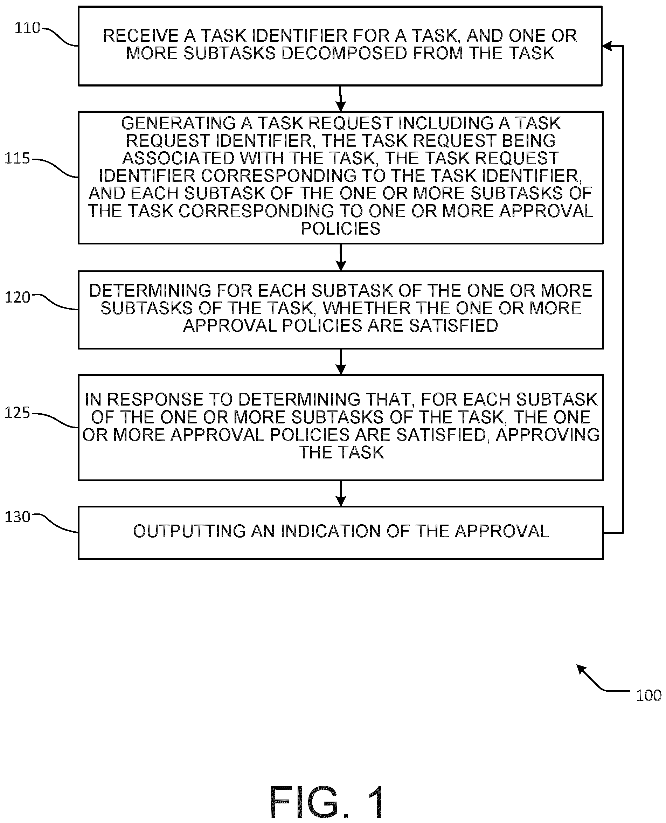

FIG. 1 is a simplified diagram showing a method 100 for managing task approvals according to certain embodiments of the present disclosure. This diagram is merely an example. One of ordinary skill in the art would recognize many variations, alternatives, and modifications. The method 100 for managing task approvals includes processes 110, 115, 120, 125, and 130. Although the above has been shown using a selected group of processes for the method 100 for managing task approvals, there can be many alternatives, modifications, and variations. For example, some of the processes may be expanded and/or combined. Other processes may be inserted into those noted above. Depending upon the embodiments, the sequence of processes may be interchanged with others replaced. Further details of these processes are found throughout the present disclosure.

According to some embodiments, at the process 110, a task identifier (e.g., task RID) for a task, and one or more subtasks decomposed from the task are received. In some examples, the task identifier and one or more subtasks are received from a service application or component. In some examples, the task identifier and one or more subtasks are received by an approvals application or component. For example, the service application can receive one or more task arguments for the task, generate the task identifier for the task, decompose the task into subtasks, and provide the task identifier and the one or more subtasks to the approvals application. In some examples, method 100 improves cybersecurity for a system by requiring tasks to be approved using techniques provided herein, before the tasks can be performed.

In some examples, the task that is requested to be approved includes accessing a resource, creating a resource, interfacing with a network, and/or deploying a resource. For example, the resource that a user is trying to access, create, and/or deploy can include one or more projects, or one or more files, or one or more datasets, or one or more other types of resources that may be accessible via a computing device, as will be recognized by those of ordinary skill in the art. For example, the resources can include a text document, a spreadsheet, a presentation, a portable document format (PDF), an image, an audio file, a video file, a form, a portal, control of a hardware device, and/or a database. The resource examples provided are merely examples and are not intended to limit the scope of the disclosure, as other examples of resources should be recognized by those of ordinary skill in the art.

In some examples, prior to the task being requested to be approved, a user is denied the ability to perform the task. In some examples, a user interface is displayed for a user to request permission to perform the task. In some examples, the one or more subtasks include a marking. In some examples, the marking corresponds to at least one selected from a group consisting of a sensitivity level, a training level, a user type, and an organization type. For example, a user may be unable to perform a subtask with a particular marking unless the user has a sensitivity clearance that satisfies the sensitivity level of the particular marking. As an example, a user may be unable to perform a subtask with a particular marking unless the user has certain training that satisfies the training level of the particular marking. As an example, a user may be unable to perform a subtask with a particular marking unless the user has a certain title that satisfies the user type of the particular marking. As an example, a user may be unable to perform tasks with a particular marking unless the user is part of a certain organization that satisfies the organization type of the particular marking.

According to some embodiments, at the process 115, a task request is generated that include a task request identifier (e.g., task request RID). In some examples, the task request is associated with the task. In some examples, the task request identifier corresponds to the task identifier. In some examples, each subtask of the one or more subtasks of the task corresponds to one or more approval policies. In some examples, different tasks can be decomposed to include one or more of the same subtasks. In some examples, the same subtask for different tasks correspond to the same one or more approval policies.

In some examples, the one or more approval policies are only applied at a subtask level. For example, since the approvals application may only receive subtasks (not tasks) the approvals application may only be capable of applying approval policies at the subtask level.

According to some embodiments, at the process 120, for each subtask of the one or more subtasks of the task, it is determined whether the one or more approval policies are satisfied. For example, if an approval policy requires a user to have certain permissions, markings, associations, titles, memberships, or the like, then the approvals application may evaluate whether the user does or does not have the requisite permissions, markings, associations, titles, memberships, or the like. In some examples, an approval policy may require a user to have one or more permissions, markings, associations, titles, and/or memberships.

According to some embodiments, at the process 125, in response to determining that, for each subtask of the one or more subtasks of the task, the one or more approval policies are satisfied, the task is approved. In some examples, the user is notified that the task is approved. In some examples, the approval of the task is stored, such as to provide an audit trail. In some examples, the ability to provide an audit trail for approval of tasks improves cybersecurity.

In some examples, at least one subtask of the one or more subtasks includes a version and an ID. In some examples, the version of the subtask and/or the ID may be changed. In some examples, if a task with a given subtask was previously approved, then when a version and/or ID of the given subtask is changed, the approval of the task may be invalidated. For example, the approval of a task may be dependent on one or more states of the subtasks staying the same as when they were approved. In some examples, if one or more subtasks are updated in some manner, any tasks corresponding to the one or more updated subtasks need to be reapproved.

In some examples, the approval policies for every subtask of a task must be satisfied for the task to be approved. In some examples, if the approval policies for one or more subtasks of a task are not satisfied, then the task is rejected (not approved). In some examples, a user is notified that their task is not approved. In some examples, a user is notified of why their task is not approved. In some examples, a user is provided feedback on actions to take such that their task can be later approved, despite not currently being approved. In some examples, someone other than the user is notified that the task is not approved, why the task is not approved, and/or provided feedback on actions to take such that the task can be later approved.

According to some embodiments, at the process 130, and indication of the approval is output. In some examples, the indication of the approval is output local to one or more devices that performed aspects of method 100. In some examples, the indication of the approval is output to one or more devices remote from those that performed aspects of method 100. In some examples, in response to the approval of the task, an indication is sent to the service application to indicate that the task should be performed. In some examples, in response to the approval of the task, an indication of the task (e.g., a task request, task identifier, task RID, etc.) is invoked. In some examples, the task is performed, once the task is approved. In some examples, the task is enabled to be performed, once the task is approved. In some examples, the task that corresponds to the indication of the task is performed and/or enabled to be performed, once the indication of the task request is approved.

In some examples, the performing the task includes granting a user access to a resource. In some examples, the performing the task creating a resource. In some examples, the performing the task includes granting permission for a system and/or user to interface with a particular network. In some examples, the performing the task includes deploying a resource. The examples of tasks that can be performed using techniques provided herein are merely examples and those of ordinary skill in the art should recognize other types of tasks that can be performed, at least in light of the teachings provided herein.

In some examples, in response to outputting the indication of the approval at process 130, one or more results of performing the task are received. For example, the indication of the approval may be output to the service application and the service application may provide the results of performing the task. In some examples, the results of performing the task include an indication of one or more created resources, of one or more updates access permissions, of network traffic via a new interface, and/or of a resource being deployed. Additional and/or alternative types of results that can be received should be recognized by those of ordinary skill in the art.

In some embodiments, method 100 may terminate at process 130. In some embodiments, method 100 may return to process 110 (or any other process from method 100) to provide an iterative loop, such as of receiving subtasks decomposed from a task, determining whether each subtask satisfies associated approval policies, and if so, sending an indication corresponding to the task being approved.

As discussed above and further emphasized here, FIG. 1 is merely an example. One of ordinary skill in the art would recognize many variations, alternatives, and modifications. For example, if, for at least one subtask of the one or more subtasks of the task, it is determined, at the process 120, that the one or more approval policies are not satisfied, the task is not approved (e.g., the task being rejected). As an example, if the task is not approved (e.g., the task being rejected), an indication of the disapproval (e.g., an indication of the rejection) is output.

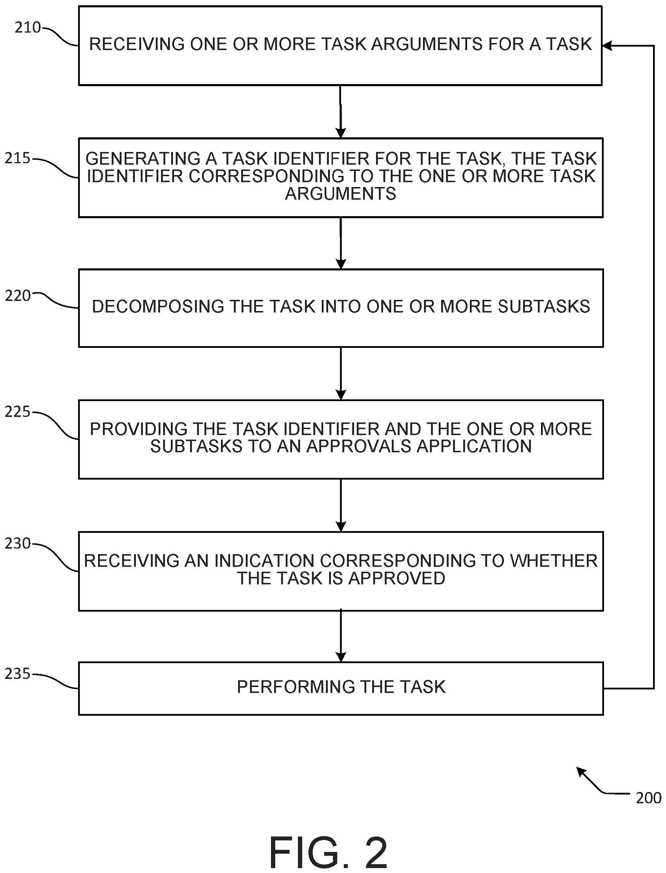

FIG. 2 is a simplified diagram showing a method 200 for managing task approvals, according to certain embodiments of the present disclosure. This diagram is merely an example. One of ordinary skill in the art would recognize many variations, alternatives, and modifications. The method 200 for managing task approvals includes processes 210, 215, 220, and 225. Although the above has been shown using a selected group of processes for the method 200 for managing task approvals, there can be many alternatives, modifications, and variations. For example, some of the processes may be expanded and/or combined. Other processes may be inserted into those noted above. Depending upon the embodiments, the sequence of processes may be interchanged with others replaced. Further details of these processes are found throughout the present disclosure.

In some examples, aspects of the method 200 for managing task approvals can operate in parallel and/or sequential to aspects of the method 100 for managing task approvals. In some examples, aspects of the method 100 for managing task approvals is implemented by an approvals application, and aspects of the method 200 for managing tasks approvals are implements by a service application.

According to some embodiments, at the process 210, one or more task arguments for a task are received. In some examples, the one or more task arguments are stored. For example, the service application can store the arguments, such as in a task store. In some examples, the task arguments correspond to aspects of a task that is requested to be approved. In some examples, the task arguments provide sufficient information for the task to be performed, if it is approved.

According to some embodiments, at process 215, a task identifier (e.g., task RID) is generated for the task. In some examples, the task identifier is generated by the service application. In some examples, the task identifier corresponds to the one or more task arguments. For example, the task identifier can include a pointer to where the one or more task arguments stored in the task store.

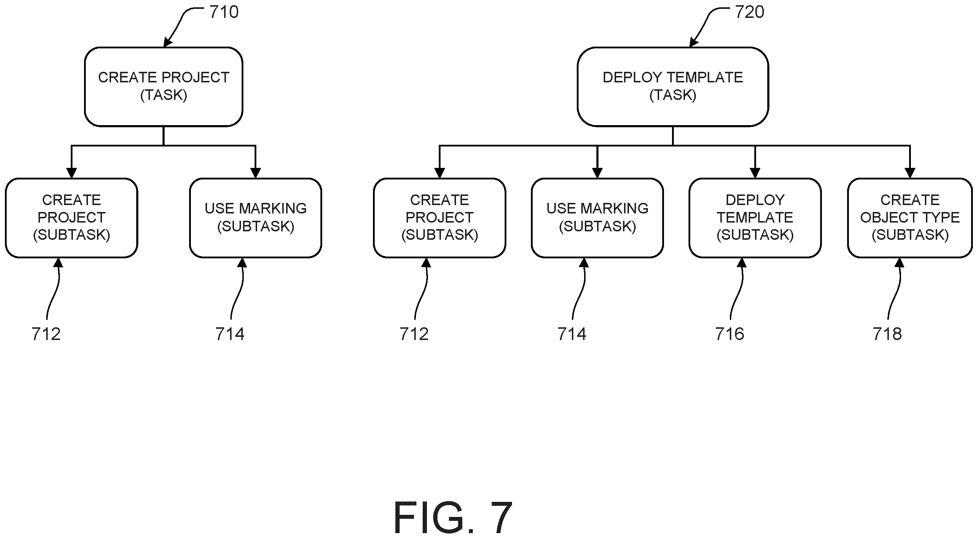

According to some embodiments, at process 220, the task is decomposed into one or more subtasks. For example, as shown in FIG. 7, a task to deploy a template could include creating a project, using markings, deploying the template, and creating an object type. In some examples, the task can be decomposed into a plurality of subtasks. In some examples, the plurality of subtasks, when performed together, perform the task.

According to some embodiments, at process 225, the task identifier and the one or more subtasks are provided to the approvals application. For example, the task identifier and the one or more subtasks may be stored in a memory location associated with the approvals applications, such that the approvals application has access to the task identifier and the one or more subtasks. In some examples, the task identifier and the one or more subtasks may be transmitted from a first device to a second device, with the second device being associated with the approvals application.

According to some embodiments, at process 230, in response to providing the task identifier and the one or more subtasks to the approvals application, an indication is received corresponding to whether the task is approved. For example, the approvals application may output indication of the task being approved, which is received by the service application.

According to some embodiments, at process 235, the task is performed. In some examples, in response to the approval, an indication of task (e.g., the task identifier, a task RID, a task request, etc.) is invoked. For example, the service application can invoke the indication of the task. In some examples, the indication of the task being invoked means that the task is performed.

In some examples, performing the task includes adapting a computing device to execute operations to perform the task. In some examples, performing the task includes granting a user access to a resource. In some examples, performing the task creating a resource. In some examples, performing the task includes granting permission for a system and/or user to interface with a particular network. In some examples, performing the task includes deploying a resource. The examples of tasks that can be performed using techniques provided herein are merely examples and those of ordinary skill in the art should recognize other types of tasks that can be performed, at least in light of the teachings provided herein.

In some examples, after performing the task, the service application can send results of performing the task (e.g., to the approvals application). In some examples, the results of performing the task include an indication of one or more created resources, of one or more updates access permissions, of network traffic via a new interface, and/or of a resource being deployed. Additional and/or alternative types of results that can be received should be recognized by those of ordinary skill in the art.

In some embodiments, method 200 may terminate at process 235. In some embodiments, method 200 may return to process 210 (or any other process from method 200) to provide an iterative loop, such as of receiving one or more task arguments for a task, breaking the task down into subtasks, providing the subtasks to an approvals application, and receiving an indication of whether the task is approved and should thereby be performed.

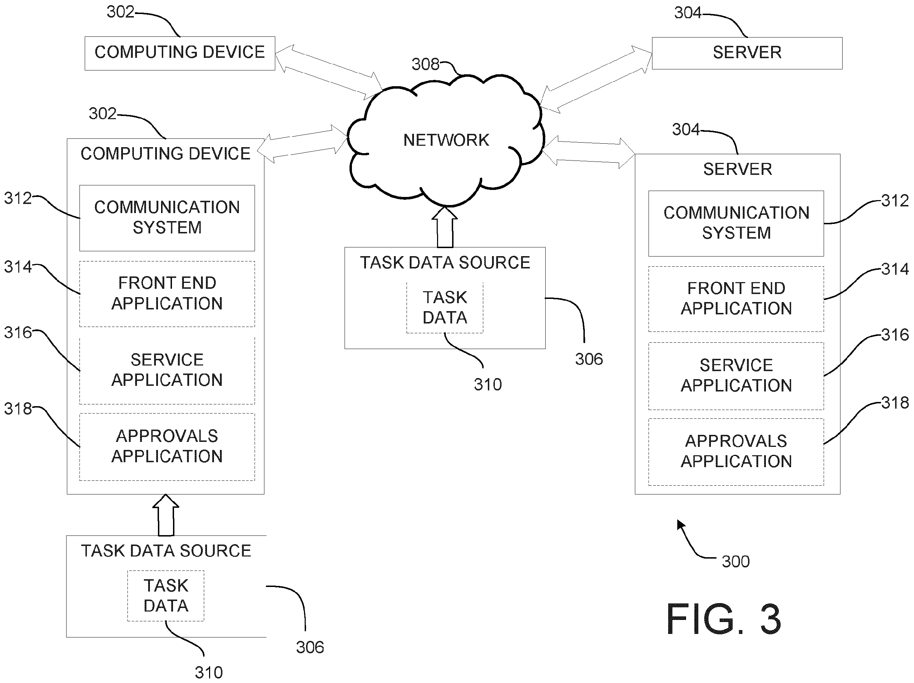

FIG. 3 shows an example of a system 300, in accordance with some aspects of the disclosed subject matter. In some embodiments, the system 300 is a system for managing task approvals. FIG. 3 is merely an example. One of the ordinary skilled in the art would recognize many variations, alternatives, and modifications. Although system 300 has been shown using a selected group of components, there can be many alternatives, modifications, and variations. For example, some of the components may be expanded and/or combined. Other components may be inserted into those noted above. Depending upon the example, the arrangement of components may be interchanged with others replaced. Further details of these components are found throughout the present disclosure.

In some embodiments, various components in the system 300 can execute software or firmware stored in non-transitory computer-readable medium to implement various processing steps. In some embodiments, various components and processors of the system 300 can be implemented by one or more computing devices including, but not limited to, circuits, a computer, a cloud-based processing unit, a processor, a processing unit, a microprocessor, a mobile computing device, and/or a tablet computer. In some embodiments, various components of the system 300 can be implemented on a shared computing device. In some embodiments, a component of the system 300 can be implemented on multiple computing devices. In some embodiments, various modules and components of the system 300 can be implemented as software, hardware, firmware, or a combination thereof.

In some embodiments, the system 300 includes one or more computing devices 302, one or more servers 304, one or more task data sources 306 for receiving task data 310, and a communication network or network 308. In some embodiments, the computing device 302 can receive task data 310 from the task data source 306. Additionally, or alternatively, in some embodiments, the network 308 can receive task data 310 from the task data source 306.

In some embodiments, computing device 302 includes one or more communication systems 312, one or more front end applications 314, one or more service applications 316, and/or one or more approvals applications 318. In some embodiments, computing device 302 can execute at least a portion of the front end application to generate a user interface at which a user submits requests for one or more tasks to be performed. In some examples, the requests include one or more task arguments (e.g., information corresponding to what the task is and why the user should be granted permission for the task to be performed). In some embodiments, computing device 302 can execute at least a portion of the service application 316 to receive one or more task arguments for a task that is requested to be performed. In some embodiments, the service application 316 is configured to decompose the task into one or more subtasks. In some examples, the service application 316 can perform one or more processes described earlier herein with respect to method 200 of FIG. 2.

In some embodiments, computing device 302 can further execute at least a portion of the approvals application 318 to receive one or more subtasks decomposed from a task and determining, for each subtask, whether one or more approval policies are satisfied. In some examples, the approvals application 318 can perform one or more processes described earlier herein with respect to method 100 of FIG. 1.

In some embodiments, server 304 includes one or more communication systems 312, one or more front end applications 314, one or more service applications 316, and/or one or more approvals applications 318. In some embodiments, server 304 can execute at least a portion of the front end application to generate a user interface at which a user submits requests for one or more tasks to be performed. In some examples, the requests include one or more task arguments (e.g., information corresponding to what the task is and why the user should be granted permission for the task to be performed). In some embodiments, server 304 can execute at least a portion of the service application 316 to receive one or more task arguments for a task that is requested to be performed. In some embodiments, the service application 316 is configured to decompose the task into one or more subtasks. In some examples, the service application 316 can perform one or more processes described earlier herein with respect to method 200 of FIG. 2.

In some embodiments, server 304 can further execute at least a portion of the approvals application 318 to receive one or more subtasks decomposed from a task and determining, for each subtask, whether one or more approval policies are satisfied. In some examples, the approvals application 318 can perform one or more processes described earlier herein with respect to method 100 of FIG. 1.

Additionally, or alternatively, in some embodiments, computing device 302 can communicate the task data 310 to the server 304 over a communication network 308, which can execute at least a portion of the front end application 314, service application 316, and/or approvals application 318. In some embodiments, the front end application 314 executes one or more portions of methods/processes disclosed herein and/or recognized by those of ordinary skill in the art, in light of the present disclosure. In some embodiments, the service application 316 executes one or more portions of methods/processes disclosed herein and/or recognized by those of ordinary skill in the art, in light of the present disclosure. In some embodiments, the approvals application 318 executes one or more portions of methods/processes disclosed herein and/or recognized by those of ordinary skill in the art, in light of the present disclosure.

In some embodiments, computing device 302 and/or server 304 can be any suitable computing device or combination of devices, such as a desktop computer, a vehicle computer, a mobile computing device (e.g., a laptop computer, a smartphone, a tablet computer, a wearable computer, etc.), a server computer, a virtual machine being executed by a physical computing device, a web server, etc. Further, in some embodiments, there may be a plurality of computing device 302 and/or a plurality of servers 304.

In some embodiments, the task data source can be any suitable source of a permission request (e.g., data generated from a computing device, data stored in a repository, data generated from a software application, data received via user input, etc.) In some embodiments, the task data 310 can be received from memory storing the task data (e.g., local memory of computing device 302, local memory of server 304, cloud storage, portable memory connected to computing device 302, portable memory connected to server 304, etc.). In some embodiments, the task data source 306 can be an application configured to generate task data and provide the task data via a software interface. In some embodiments, the task data source 306 is a source local to computing device 302. In some embodiments, the task data source 306 is a source remote from computing device 302 and can communicate to computing device 302 (and/or server 304) via a communication network (e.g., communication network 308).

In some embodiments, the task data source 306 includes a repository implemented using any one of the configurations described below. In some embodiments, a data repository may include random access memories, flat files, XML files, and/or one or more database management systems (DBMS) executing on one or more database servers or a data center. In some embodiments, a database management system may be a relational (RDBMS), hierarchical (HDBMS), multidimensional (MDBMS), object oriented (ODBMS or OODBMS) or object relational (ORDBMS) database management system, and the like. In some embodiments, the data repository may be, for example, a single relational database. In some embodiments, the data repository may include a plurality of databases that can exchange and aggregate data by data integration process or software application. In some embodiments, at least part of the data repository may be hosted in a cloud data center. In some embodiments, a data repository may be hosted on a single computer, a server, a storage device, a cloud server, or the like. In some embodiments, a data repository may be hosted on a series of networked computers, servers, or devices. In some embodiments, a data repository may be hosted on tiers of data storage devices including local, regional, and central.

In some embodiments, the task data 310 includes arguments or metadata relating to a task that is requested to be performed. For example, the task data 310 can include for what user(s) the task request is being made, from what device the task request originated, for when and/or how long the task is requested to be performed, what marking are requested to be associated with the task, what security level is associated with the task, what justification is provided for the task request to be granted, context associated with the task request, and/or supporting documents for the task request to be approved. Additional and/or alternative data that the task data 310 can include should be recognized by those of ordinary skill in the art.

In some embodiments, communication network 308 can be any suitable communication network or combination of communication networks. For example, communication network 308 can include a Wi-Fi network (which can include one or more wireless routers, one or more switches, etc.), a peer-to-peer network (e.g., a Bluetooth network), a cellular network (e.g., a 3G network, a 4G network, a 5G network, etc., complying with any suitable standard), a wired network, etc. In some embodiments, communication network 308 can be a local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, a wide area network (WAN), a public network (e.g., the Internet), a private or semi-private network (e.g., a corporate or university intranet), any other suitable type of network, or any suitable combination of networks. In some embodiments, communication links (arrows) shown in FIG. 3 can each be any suitable communications link or combination of communication links, such as wired links, fiber optics links, Wi-Fi links, Bluetooth^{®} links, cellular links, satellite links, etc.

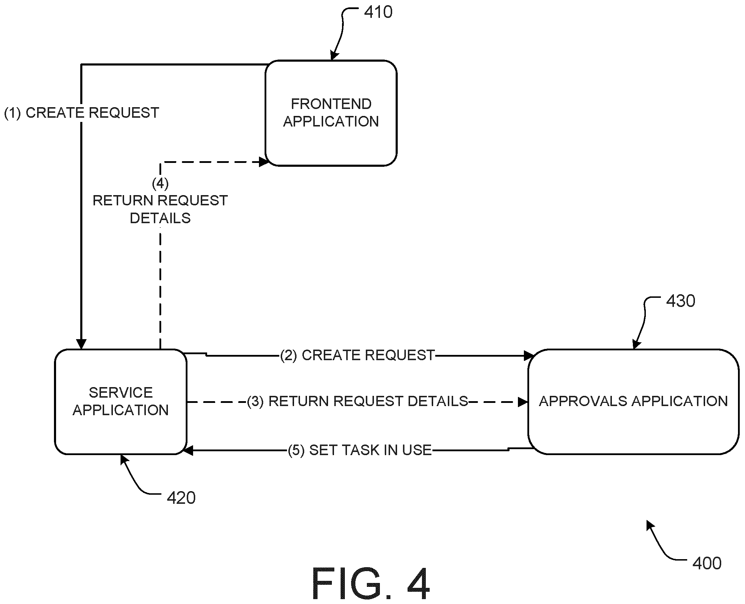

FIG. 4 illustrates an example flow between a frontend application or component 410, service application or component 420, and approvals application or component 430, according to certain embodiments of the present disclosure. In some examples, the frontend application is the same as or similar to the frontend application 314 described with respect to the system 300 of FIG. 3. In some examples, the service application is the same as or similar to the service application 316 described with respect to the system 300 of FIG. 3. In some examples, the approvals application is the same as or similar to the approvals application 318 described with respect to the system 300 of FIG. 3.

In some examples, the frontend application 410 is configured to generate a user interface, such as a graphical user interface. In some examples, the frontend application 410 is configured to receive input (e.g., from a user or another system) corresponding to a request for a task to be performed. In some examples, the frontend application receives one or more task arguments for a task. In some examples, the frontend component sends the task arguments to the service application 420. In some examples, the frontend application 410 calls the service application 420 via an API.

In some examples, the service application 420 stores the arguments received from the frontend application in a data store. In some examples, the service application 420 generates a task identifier (e.g., task RID) to represent the received task arguments. In some examples, the service application 420 calls the approvals application 430 to create a new task request, passing the task identifier as an argument or parameter.

In some examples, the approvals application 430 generates a new request and stores the request (e.g., in a memory location corresponding to the approvals application 430). In some examples, the approvals application 430 generates an task request identifier (e.g., task request RID) for the request it generates. In some examples, a task request identifier (e.g., task request RID), is different than the task identifier (e.g., task RID) generated by the service application 420. In some examples, the approvals application 430 returns the task request identifier to the service application 420.

In some examples, the service application returns details to the frontend application 410, such as the task request identifier and/or the task identifier . In some examples, the frontend application 410 can provide an indication to a user of the task request identifier and/or the task identifier being generated.

In some examples, asynchronously, after the approvals application 430 generates the task request identifier, the approvals application 430 calls the service application 420 to report that it has created a request for the task identifier that the approvals application 430 was provided by the service application 420. In some examples, the approvals application 430 sends an indication of the created request back to the service application 420. In some examples, sending the indication of the created request is referred to as setting the task in use. In some examples, setting the task in use is performed such that the service application 420 can maintain the invariant that every task in its data store corresponds to a task request in the approvals application 430.

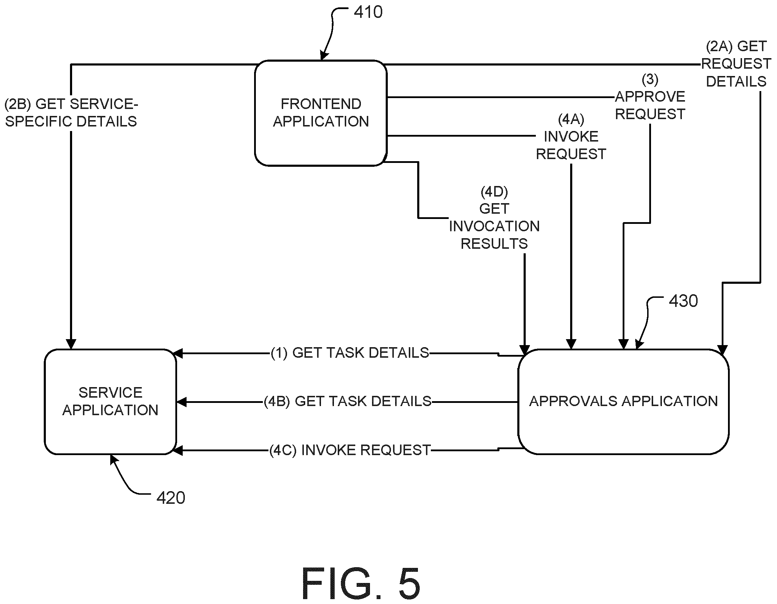

FIG. 5 illustrates another example flow between the frontend application or component 410, service application or component 420, and approvals application or component 430, according to certain embodiments of the present disclosure.

In some examples, once a request has been created, the approvals application 430 fetches a current state of a request from the service application 420. In some examples, the approvals application 430 fetches the current state in the background of other processes being performed by the frontend application 410, service application 420, and/or approvals application 430. In some examples, the fetched state includes subtasks that make up the request, including associated metadata. For example, the subtasks can include types, IDs, versions, and/or parameters, as well as whether the request can currently be invoked (e.g., whether a task corresponding to the request is approved to be performed). In some examples, the fetched state is periodically refreshed.

In some examples, when a user visits a UI page for creating and/or reviewing requests, the frontend application 410 makes a request to the approvals application 430 to load a current status of the request. In some examples, the current status of the request includes the task identifier, policies, approvals, current approval status, and/or justifications. In some examples, the frontend application 410 makes a request to the service application 420 (e.g., using the task identifier) to load the details of what is actually being requested (e.g., based on the arguments passed in by the user when creating the request).

In some examples, to approve the request, the user makes a request to the approvals application 430, which determines whether certain policies are satisfied. In some examples, when the request has been approved and the user is ready to invoke it, the frontend application 410 makes a request to the approvals application 430 to ask that the request be invoked. In some examples, invoking a request means to perform a task associated with the request.

In some examples, the approvals application 430 refreshes the current task details from the service, and re-evaluates the policies against the up-to-date task details. In some examples, the approvals application 430 calls the service application 420 to ask it to invoke the request. In some examples, this request is performed asynchronously, with the frontend application's 410 request returning after it has been submitted. In some examples, the service application 420 validates that the task is still up to date, and performs the task. In some examples, the service application 420 returns a result of performing the task (e.g., the identifiers and/or RIDs of any created resources) to be stored by the approvals application 430. In some examples, the frontend application 410 polls the approvals application 430 to get the invocation result.

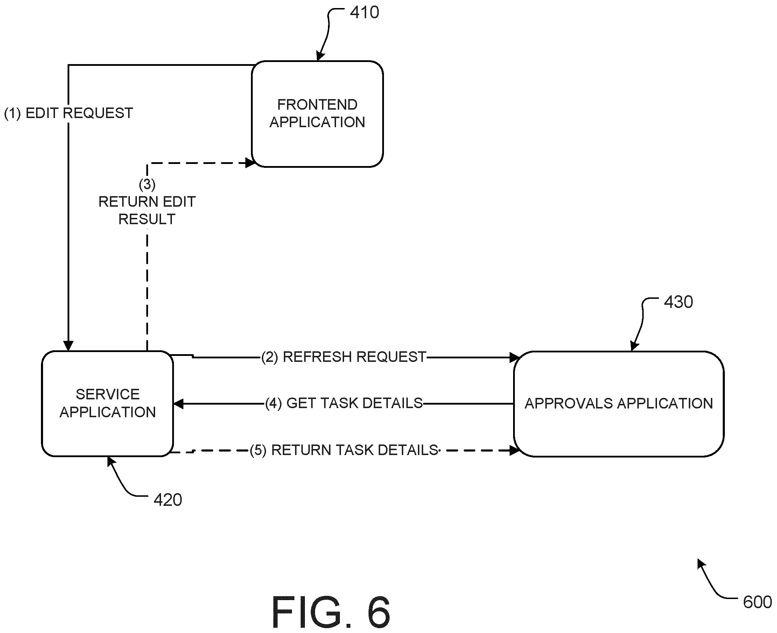

FIG. 6 illustrates another example flow between the frontend application or component 410, service application or component 420, and approvals application or component 430, according to certain embodiments of the present disclosure.

In some examples, the service application 420 supports editing the task being requested. In such examples, the frontend application 410 makes a request to the service application 420 to propose/request the changes, passing the task identifier (or something equivalent) to the service application 420. In some examples, a user provides input to the frontend application 410 corresponding to the proposed/requested change to the task.

In some examples, the service application 420 updates what it has stored about the request. In some examples, the service application 420 calls the approvals application 430 to notify the approvals application 430 that the request has been updated. In some examples, no details of the actual change to the request are included in the call to the approval application 430, other than the task identifier. In some examples, the frontend application 410 call to propose/request the changes returns with updates for the user. For example, the frontend application 410 can provide an indication to the user of whether the proposed change was successfully implemented, whether additional information is required, and/or whether the proposed change was rejected. In some examples, asynchronously, the approvals application 430 calls the service application 420 to load the latest state of the request. In some examples, the service application 420 returns the updated/latest state, and the approvals application 420 recomputes the policies against the updated state. In some examples, the proposed change from the frontend application 410 prompts the approvals application 430 to compare the proposed changes against its approval policies to determine whether the proposed changes can/will be approved.

FIG. 7 illustrates example tasks, such as a first task 710 and a second task 720, according to certain embodiments of the present disclosure. In some examples, the first task 710 is a task to create a new project. In some examples, the second task 720 is a task to deploy a template. The types of tasks illustrates in FIG. 7 are merely examples. Additional and/or alternative types of tasks should be recognized by those of ordinary skill in the art, at least in light of teachings provided herein.

FIG. 7 also illustrates example subtasks. For example, the first task 710 corresponds to a plurality of subtasks, including a first subtask 712 and a second subtask 714. In some examples, the first subtask 712 is to create a project and the second subtask 714 is to use markings.

In some examples, the second task 720 corresponds to a plurality of subtasks, including the first subtask 712, the second subtask 714, a third subtask 716, and a fourth subtask 718. In some examples, the first subtask 712 that corresponds to the second task 720 is the same as the first subtask 712 that corresponds to the first task 710. In some examples, the second subtask 714 that corresponds to the second task 720 is the same as the second subtask 714 that corresponds to the first task 710. In some examples, the third subtask 716 is deploying a template. In some examples, the fourth subtask 718 is to create an object type.

In some examples, the tasks 710, 720 represents an action that a user wishes to perform, and generally corresponds to the user providing input (e.g., save/create/deploy/access/etc.) in the frontend application (e.g., a graphical user interface). In some examples, the tasks 710, 720 are represented by the service application's task identifier. In some examples, there is a 1:1 relationship between task identifiers (generated by the service application) and task request identifiers (generated by the approvals application). In some examples, each task type (such as "create project", "delete enrollment", "request access", etc.) is owned by a single service application, which is the service application that the user calls to create the request and the service application that the approvals application calls to load details about the request and later to invoke the request.

In some examples, each task 710, 720 contains multiple subtasks 712-718. In some examples, subtasks (e.g., the subtasks 712-718) allow a single request to perform multiple actions, either of the same type (such as having a subtask for each object type that is edited in a change request) or of different types (such as creating a project and a new object type as part of deploying a template).

In some examples, policies are only applied at the subtask level (not at the task level), and a request is only approved when the policies on all of its constituent subtasks have been approved. In some examples, the policies are applied at the subtask level by the approvals application. In some examples, a policy can be defined for creating a project, and will still be applied if the project is created as a subtask of deploying a template. For example, the policy applied to the subtask 712 for creating a project when the task 710 is creating a project can be the same as the policy applied to the subtask 712 for creating a project when the task 720 is deploying a template. In some examples, there can be a subtask with the same or similar name to the task that it belongs to, so that users can write policies to govern that task.

In some examples, subtasks are a flat list, not hierarchical, such that subtasks cannot have children. In some examples, it is up to the service application to choose the set of subtasks that apply to a given task request, based on the actions that will be performed when the task is performed. In particular examples, if a service application wants to perform an action that includes some other service application's actions, it is the responsibility of the service application to make sure they include all of the relevant subtasks when creating the request.

An example subtask hierarchy is: subtasks have an ID and a version, both of which can be arbitrary strings (but can be safe to log). In some examples, changing just the version allows the history of a subtask to be tracked, including historical approval, comments, and/or edits. In some examples, approval is granted on a specific subtask ID and version, so changing the ID or version will invalidate all approvals for that subtask. In some examples, subtasks can be used to achieve granular invalidation, so changes to one part of the request will require re-approval only from people that approved the subtask that changed. In some examples, subtasks are only used for determining the policies that should be applied, not for invoking the request, such that invoking is done at the task level only. In some examples, if a request involves making changes in multiple different service applications, it is up to the service application that defined the task to orchestrate all of the changes.

In some examples, approvals service provided herein are intended to provide a back-end for handling workflows in a centralized platform that cannot be unilaterally performed by the user that wishes to do it. In some examples, the workflows include requesting access to a resource, requesting permission from a governance team to perform a certain action, requesting a second pair of eyes to check a change, and/or collaborating with another group. In some examples, a wide range of services can be integrated with the approvals service techniques provided herein. In some examples, the approval service has no compile-time knowledge of the workflows that are integrated, such that a plurality of workflows can be configured. In some examples, generalizable logic implements the approvals service, to minimize work required the implement specific use case. In some examples, specific use cases can involve additional logic being programmed into the approval service to implement the use cases.

In some examples, approvals components, service components, and/or frontend components are provided. In some examples, components include software applications. In some examples, components include hardware, software, and/or hardware and software working together, to implement certain processes. In some examples, frontend components include a user interface, such as graphical user interface. In some examples, the user interface includes interactive elements to which users provide input, such as buttons, forms, menus, and/or other interactive elements that should be recognized by those of ordinary skill in the art. In some examples, the approvals components and/or service components are back-end components that retrieve, store, and/or manipulate data from the frontend components.

In some examples, approvals components, service components, and/or associated frontend components are configured and responsible for: storing policies for who needs to approve a given task and storing information about each request. In some examples, the information stored about each request includes approvals, rejections, and comments, user-provided metadata relating to the request (rather than to the result), such as justification, pointers to historical versions of the request, and/or general metadata, such as the creation time of the request and who is the requesting user. In some examples, the approvals components, service components, and/or associated frontend components are configured and responsible for: providing an application programming interface (API) for creating a request from a task request identifier (e.g., task request RID), and approving and rejecting the request. In some examples, the approvals components, service components, and/or associated frontend components are configured and responsible for: computing whether an approval policy has been satisfied, notifying the relevant services, providing visibility into why a request was approved (which approvals satisfied which parts of the policy), and maintaining historical approval requests for auditing.

In some examples, the approvals components, service components, and/or associated frontend components are configured and responsible for: providing a centralized inbox for users to find requests that they should review, allowing users to explicitly request reviews from others, and/or hosting a user interface (UI) for reviewing requests (e.g., requests will be viewed in an approvals application).

In some examples, service components that integrate are responsible for: storing the information needed to perform a task (e.g., the arguments to the request), providing an API to store the task arguments, providing a UI for creating an approval request, performing the task, implementing request-specific details of UI for a given request (so users can review what is being done), UIs required to edit a request, and/or defining a default policy that must be satisfied to perform a task.

In some examples, API flows can be created. In some examples, to create a new request, the API flow includes a frontend component calling a service component with arguments to perform a task. In some examples, the service component stores the arguments in a task store, and generates an RID to represent them (e.g., a task RID). In some examples, the database transaction finishes committing the arguments before proceeding in the API flow. In some examples, the service component calls approvals to create a new task request, passing the task RID as an argument. In some examples, an approvals service or component (e.g., separate from the service component) creates a new request in its store, and generates an RID for it (e.g., a task request RID). In some examples, the approvals component returns the task request RID back to the service component. In some examples, the service component stores the task request RID. In some examples, the service component does not store the task request RID. In some examples, the returned request is an HTTP (Hypertext Transfer Protocol) response to an HTTP request. In some examples, an HTTP request is a message sent by a first computing component (such as the service component) to a second computing component (such as the approvals component), typically to request a resource or perform an action.

In some examples, the service component returns information to the frontend component, such as including the task request RID. In some examples, the approvals component calls the service component back to report that it has created a request for the provided task RID (and passes its task request RID as part of the request). In some examples, the approvals component calls the service component asynchronously after the approvals component creates the task request with the task request RID.

In some examples, once a request has been created, the API flow includes steps to review and invoke the request. In some examples, the approvals component fetches the current state of a request from the service component. In some examples, the approvals component fetches the current state in the background of other processes being performed. In some examples, the fetched state includes subtasks that make up the request, including associated metadata. For example, the subtasks can include types, IDs, versions, and/or parameters, as well as whether the request can currently be invoked. In some examples, this fetches state is periodically refreshed.

In some examples, when a user visits a UI page for creating and/or reviewing requests, the frontend component makes a request to the approvals component to load a current status of the request. In some examples, the current status of the request includes the task RID, policies, approvals, current approval status, and/or justifications. In some examples, the frontend component makes a request to the service component (e.g., using the task RID) to load the details of what is actually being requested (e.g., based on the arguments passed in by the user when creating the request).

In some examples, to approve the request, the user makes a request to the approvals component, which determines whether certain policies are satisfied. In some examples, when the request has been approved and the user is ready to invoke it, the frontend components makes a request to the approvals component to ask that the request be invoked. In some examples, invoking a request means to perform a task associated with the request.

In some examples, the approvals component refreshes the current task details from the service, and re-evaluates the policies against the up-to-date task details. In some examples, the approvals component calls the service component to ask it to invoke the request. In some examples, this request is performed asynchronously, with the frontend's request returning after it has been submitted. In some examples, the service component validates that the task is still up to date, and performs the task. In some examples, the service component returns a result of performing the task (e.g., the RIDs of any created resources) to be stored by the approvals component. In some examples, the frontend component polls the approvals component to get the invocation result.

In some examples, the service component supports editing the task being requested. In such examples, the API flow includes the frontend component making a request to the service component to propose/request the changes, passing the task RID (or something equivalent) to the service component. In some examples, the service component updates what it has stored about the request. In some examples, the service component calls the approvals component to notify the approvals component that the request has been updated. In some examples, no details of the actual change to the request are included in the call to the approval component, other than the task RID. In some examples, the frontend component call returns with any updates for the user. In some examples, asynchronously, the approvals component calls the service component back to load the latest state of the request. In some examples, the service component returns the updated/latest state, and the approvals component recomputes the policies against the updated state.

In some examples, the service component maintains the invariant that every task in its store corresponds to a task request in the approvals component, generally because requests have side effects (such as a deletion request which will mark resources as pending deletion on the front end) or exist beyond just being a request (such as ontology branches). In some examples, where it does not matter if a request becomes orphaned due to a service outage during construction, no action is needed by the service component.

In some examples, services can know that a request has been successfully created once a call to create a task request (e.g., a createTaskRequest call) returns successfully. In some examples, for services that want to also include the task request RID in their API responses, the create a task request call returns the task request RID, which can be safe to store.

In some examples, if the create a task request call fails, the service component may not be able to tell whether the request was created successfully in approvals. In some examples, to address this, the approvals component calls the service component back using a set task in use call after the request has been created, passing the task request RID, so that the service component can record the task as being associated with a request. In some examples, the set task in use call will be retried until it succeeds. In some examples, service components do not need to do anything when a set task in use call is made, but the call can be available for service components that maintain strict invariants.

In some examples, a client API is implemented by the service component. In some examples, the client API has a plurality of endpoints. In some examples, the client API includes a get task details (e.g., getTaskDetails) call that takes a task type and task RID, and returns the current status of the request, such as the current subtasks and whether it can currently be invoked. In some examples, the value returned by the get tasks details call can change between different invocations. In some examples, the client API includes an invoke task (e.g., invokeTask) call that takes the task type, task RID, the user that clicked invoke, and/or a token that contains permissions based on the subtasks. In some examples, based on the invoke task call being made, the service component should invoke the request, and return any created resources. In some examples, the invoke task call is idempotent.

In some examples, the client API includes a created callback (e.g., createdCallback) call that takes the task type and task RID, and does not return anything. In some examples, the created callback call is used by the approvals component to call the service component back when a request has been created, so that the service component can maintain invariants around their requests. In some examples, the service component may do nothing when the created callback call is made, and the call may only be enabled when a relevant feature flag is enabled in a task definition in discovery. In some examples, the created callback call is idempotent, and does not throw if called multiple times with the same arguments. In some examples, the client API includes a closed callback (e.g., closedCallback) call that is called after the request has been closed, so that the service component can update its internal state. In some examples, the closed callback call is only enabled when a relevant feature flag is enabled in a task definition in discovery.

In some examples, a task represents an action that a user wishes to perform, and generally corresponds to the user clicking a button (e.g., save/create/etc.) in the frontend component (e.g., a graphical user interface). In some examples, tasks are the service component's representation of a request. In some examples, there is a 1:1 relationship between task RIDs (generated by the service component) and task request RIDs (generated by the approvals component). In some examples, each task type (such as "create project", "delete enrollment", "request access", etc.) is owned by a single service component, which is the service component that the user calls to create the request and the service component that approvals calls to load details about the request and later to invoke the request.

In some examples, each task can contain multiple subtasks. In some examples, subtasks allow a single request to perform multiple actions, either of the same type (such as having a subtask for each object type that is edited in a change request) or of different types (such as creating a project and a new object type as part of deploying a template). In some examples, policies are only applied at the subtask level (not at the task level), and a request is only approved when the policies on all of its constituent subtasks have been approved. In some examples, this means that a policy can be defined for creating a project, and will still be applied if the project is created as part of deploying a template. In some examples, there can be a subtask with the same or similar name to the task that it belongs to, so that users can write policies to govern that task.

In some examples, subtasks are a flat list, not hierarchical (subtasks cannot have children). In some examples, it is up to the service component to choose the set of subtasks that apply to the request, based on the actions that will be performed when the task is invoked. In particular examples, if a service component wants to perform an action that includes some other service components actions, it is the responsibility of the service component to make sure they include all of the relevant subtasks when creating the request.

An example subtask hierarchy is: subtasks have an ID and a version, both of which can be arbitrary strings (but can be safe to log). In some examples, changing just the version allows the history of a subtask to be tracked, including historical approval, comments, and/or edits. In some examples, approval is granted on a specific subtask ID and version, so changing the ID or version will invalidate all approvals for that subtask. In some examples, subtasks can be used to achieve granular invalidation, so changes to one part of the request will require re-approval only from people that approved the subtask that changed. In some examples, subtasks are only used for determining the policies that should be applied, not for invoking the request, such that invoking is done at the task level only. In some examples, if a request involves making changes in multiple different service components, it is up to the service component that defined the task to orchestrate all of the changes.

In some examples, subtasks include a set of arguments. In some examples, the set of arguments include a mapping, such as: Map<String, Set<Rid|String>>. In some examples, policies can filter the request based on such arguments. In some examples, keys are fixed for a given subtask type, so that users can safely author policies based on them. In some examples, entries in the map generally represent the resources that the subtask operates on. In some examples, a subtask for using a marking can have a single argument (the marking being used). In some examples, a subtask for creating a project has arguments for the namespace RID, applied markings, and applied tags. In some examples, a subtask for merging a pull request has arguments for a source branch, target branch, and repository RID. In some examples, policies can filter based on gatekeeper ancestors of the RIDs in the parameters, so not all of the gatekeeper ancestors need to be provided. In some examples, policies can be removed.

In some examples, approval requirements for a policy resemble simplified gatekeeper conditions. In some examples, the approval requirements for a policy are defined in disjunctive normal form, such as (or(and(condition1, condition2), and(condition3))). In some examples, supported conditions for approval requirements include a user condition, a group condition, and/or a user with permission condition. In some examples, the user condition requires approval from one or more specified users. In some examples, the group conditions requires approval from one or more users that are a member of one or more specified groups. In some examples, the user with permission condition requires approval from one or more users with a specific permission on the RID that the policy is being evaluated on. In some examples, the number of approvals required to satisfy the condition, and whether the requester's approval can count towards the condition, are configurable on each condition. In some examples, approval policies of all relevant policies must be satisfied for a subtask to be approved.

In some examples, policies are applied for each subtask, based on the subtask's arguments. In some examples, there are a plurality of components that act together to filter usage of policies, such as subtask type, context parameter filters, and/or task parameter filters. In some examples, each policy has exactly one subtask type, and is only applied to subtasks with that type. In some examples, each policy has exactly one context parameter filter. In some examples, the context parameter filter includes fields, such as parameters in the form of String values. In some examples, the fields include a set of RIDs. In some examples, the fields include Boolean values for whether descendants are included. In some examples, a subtask matches the context parameter filter if the any of the values in a subtask argument's filter parameters are contained in the filter's values. In some examples, if descendants are included (e.g., Boolean is true for descendants being included), the subtask matches if any of the gatekeeper ancestors of the values in a subtask argument's filter parameters are contained in the filter's values.

In some examples, the RID that permissions for a user with permission condition are evaluated on is the parameter value that satisfied the filter (notably, if the filter uses descendants, it is the original RID from the subtask arguments and not the RID that actually appears in the filter). In some examples, if multiple RIDs match the filter, multiple instances of the policy will apply. For example, a subtask can include a first subtask type of and arguments including a first marking and a second marking. An example policy can include the first subtask type, context parameters, and approval requirements. In some examples, if the approval requirement is a user with permission condition, then the subtask may need to be approved by a user with particular permission, on the first marking and the second marking. In some examples, RIDs in a context parameter filter are used for defining the permissions for policies.

In some examples, policies include task parameter filters. In some examples, task parameter filters can be similar to context parameter filters, but be more flexible. In some examples, task parameter filters are applied after context parameter filter matches, and are used to refine the policy's applicability using more complex rules. In some examples, task parameter filters are designed to support policies with filters like: creating a particular project in a particular namespace that will have a conjunctive marking applied, importing a resource from a particular project into any project in a particular namespace, and/or deleting a project in a particular namespace that is marked only with a particular organization.

In some examples, a policy can be configured so that when it is satisfied it will apply a user's approval to another policy, meaning that the other policy has been pre-approved. In some examples, such pre-approvals can be used to implement zero-approval policies, or to reduce the number of approvals required for a certain action. In some examples, when an approval is added by a pre-approval, it is treated as a regular approval by the user that created the pre-approval. For example, a pre-approval may not actually satisfy the approved policy, depending on the current policy and the user's current permissions. In some examples, pre-approvals are defined when authoring policies.

In some examples, policies requires a user to provide justification for their request. In some examples, the user can provide their justification by inputting the justification into a frontend component, such as via a user interface. In some examples, policies can include default policies. In some examples, service components use a gatekeeper-initial-nodes style library to define default policies for the subtasks that they own, along with the permissions that should be granted when the request is approved to invoke the request. In some examples, when a request is invoked, a token is passed back to the service with the permissions needed to perform the task. In some examples, these permissions are defined as part of the request's subtask's default policies. In some examples, the token will not be needed by service components, but it can be used for service components that need to call other service components as part of invoking the request. In some examples, if a malicious service tried to add a user to a group that had not been approved, then that addition would fail because a permission token had not been created for the addition (e.g., based on the lack of any or a correct permission token).

In some examples, the service component defines the policies. In some examples, the policies, after being defined, get sent to the approvals component to be stored. In some examples, the approvals component stores customized policies and/or defaults policies.

In some examples, there is a security model for policies. In some examples, permission to view a policy is granted by having approval to view a policy on any of the resources in the policy's context parameter filter. In some examples, the ability to view a policy is part of a viewer's role by default. In some examples, the ability to view a policy is a permission that is granted. In some examples, edits to policies are managed using approvals. In some examples, any user that can view a policy can propose edits to the policy. In some examples, a default policy for editing the policy is to require approval from a user with approval to manage a policy on each of the resources in the policy's context parameter filter. In some examples, the ability to edit a policy is part of an owner's role by default. In some examples, the ability to edit a policy is a permission that is granted (e.g., by a user with authority to grant such a permission or administrator). In some examples, users can customize policies, such as if they want more control.

In some examples, when a task is created, the service component supplies a set of resources that should be used to secure the request. In some examples, set of resources is provided in disjunctive normal form, such as (or(and(resource1, resource2), and(resource3))). In some examples, requests are registered in under an approvals root node, with dependent conditions to grant the ability to view the request, such as based on having the same permission on an appropriate combination of the supplied resources. In some examples, everyone with viewer permission on a project will be able to see all requests that impact that project. In some examples, requests are not treated as secret resources.

In some examples, a user that created the request is granted approval to manage the request. In some examples, approval to manage a request automatically expands to approval to view a request. In some examples, the approval to manage a request includes permission to close the request, invoke the request, and/or edit request metadata (such as the justification). In some examples, the user that creates the request will be able to see the request even if they ordinarily would not be able to. In some examples, allowing the user to view the request they created is safe because the request itself only contains metadata, almost all of which was likely supplied by the user, as the creator of the request.

In some examples, permission to see the parts of a request that are owned by a service component, such as edits being made to a project, is controlled by the service component that owns that data, and should be inline with the service component's existing security model. For example, if a user requests access to a resource that they cannot see, they will not be able to see details about what they are requesting access to when viewing the request (only users that can already see those resources will see them in the request).

In some examples, permission to create a request is also owned by the service component. In some examples, created requests go through the service component, so it is efficient in terms of time and computing resources to have the permission to create a request checked at the service component as well. In some examples, the service component creates the request in coordination with an approvals component, such as an authorization header (passing the user's authorization header as on-behalf-of).

In some examples, requests to perform a particular action go through approvals, to guarantee that policies are applied and to make code paths consistent. In some examples, old endpoints are kept around for service components to use (including as part of a larger task that was approved). In some examples, the service components add an expansion from an original operation to two new operations: doing the original operation, and approving the original operation. In some examples, the service components checks the do original operation on its endpoints. In some examples, users that previously had an original operation can be updated to have the do original operation and approve original operation. In some examples, the service component can force deny the do original operation, so that users that do not have a force allow (e.g., non-service users) no longer have a do original operation, but still have an approve original operation, so they are forced to use approvals. In some examples, the service component's default policy allows users with an approve original operation to approve. In some examples, users may be able to approve their own requests, but they will still have to go through processes established herein for approving their requests, such that an audit trail is created for their approval.

In some examples, policies contain a notification policy, which specifies which users are notified when the policy is applied. In some examples, the notification policy can be an explicit set of users and/or groups. In some examples, the notification policy can be all eligible approvers for a request. In some examples, default policies set the notification policy to all eligible approvers or to not notify anyone. In some examples, the set of eligible approved can be computed. For example, based on metadata associated with a request, a set of eligible approvers can be determined who are associated with one or more aspects of the metadata.

In some examples, users can manually request review from specific users. In some examples, manually requesting review will not block a request from being invoked, but would allow other users to give their input even if they are not explicitly required for policies. In some examples, manually requesting review can help to request particular reviewers when there are a large number of people that would be able to approve the request, but it is desired not to notify all of them.

In some examples, all requests will go through the approval component and/or service component, even if no approval is required, so that there is a singe path for making requests for tasks to be performed that provides an audit trail. In some examples, a request view, request list, and policy editors are located in an approvals application.

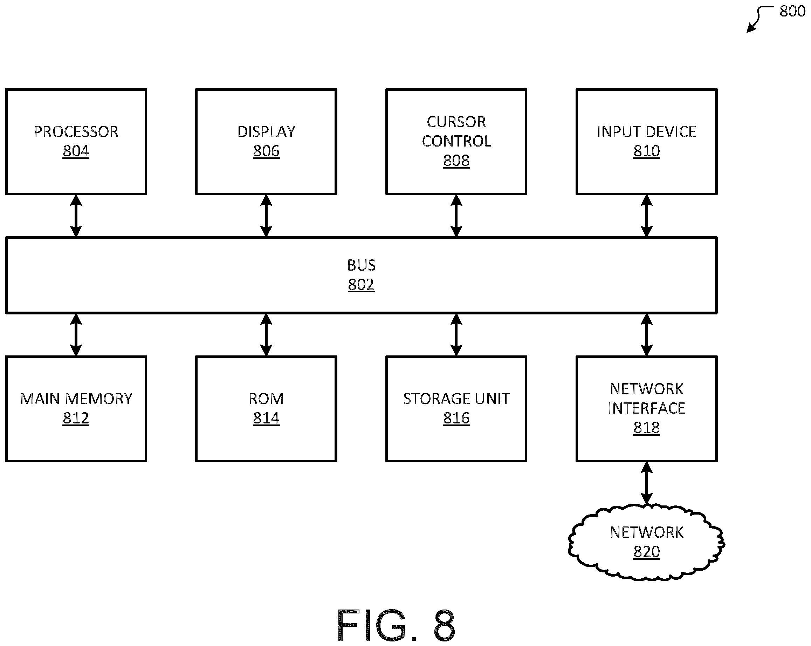

FIG. 8 is a simplified diagram showing a computing system for implementing a system 800 for managing task approvals in accordance with at least one example set forth in the disclosure. This diagram is merely an example, which should not unduly limit the scope of the claims. One of ordinary skill in the art would recognize many variations, alternatives, and modifications.

The computing system 800 includes a bus 802 or other communication mechanism for communicating information, a processor 804, a display 806, a cursor control component 808, an input device 810, a main memory 812, a read only memory (ROM) 814, a storage unit 816, and a network interface 818. In some embodiments, some or all processes (e.g., steps) of methods and/or processes disclosed herein are performed by the computing system 800. In some embodiments, the bus 802 is coupled to the processor 804, the display 806, the cursor control component 808, the input device 810, the main memory 812, the read only memory (ROM) 814, the storage unit 816, and/or the network interface 818. In certain embodiments, the network interface is coupled to a network 820. For example, the processor 804 includes one or more general purpose microprocessors. In some embodiments, the main memory 812 (e.g., random access memory (RAM), cache and/or other dynamic storage devices) is configured to store information and instructions to be executed by the processor 804. In certain embodiments, the main memory 812 is configured to store temporary variables or other intermediate information during execution of instructions to be executed by processor 804. For example, the instructions, when stored in the storage unit 816 accessible to processor 804, render the computing system 800 into a special-purpose machine that is customized to perform the operations specified in the instructions. In some embodiments, the ROM 814 is configured to store static information and instructions for the processor 804. In certain embodiments, the storage unit 816 (e.g., a magnetic disk, optical disk, or flash drive) is configured to store information and instructions.

In some embodiments, the display 806 (e.g., a cathode ray tube (CRT), an LCD display, or a touch screen) is configured to display information to a user of the computing system 800. In some embodiments, the input device 810 (e.g., alphanumeric and other keys) is configured to communicate information and commands to the processor 804. For example, the cursor control component 808 (e.g., a mouse, a trackball, or cursor direction keys) is configured to communicate additional information and commands (e.g., to control cursor movements on the display 806) to the processor 804.

According to certain embodiments, a method for managing task approvals is provided. In some examples, the method includes receiving a task identifier for a task that is requested to be approved, and one or more subtasks decomposed from the task, and generating a task request including a task request identifier. In some examples, the task request is associated with the task, the task request identifier corresponds to the task identifier, and each subtask of the one or more subtasks of the task corresponds to one or more approval policies. In some examples, the method further includes: determining, for each subtask of the one or more subtasks of the task, whether the one or more approval policies are satisfied, in response to determining that, for each subtask of the one or more subtasks of the task, the one or more approval policies are satisfied, approving the task, and outputting an indication of the approval. The method is performed using one or more processors. For example, the method is implemented according to at least FIG. 1, FIG. 2, FIG. 3, FIG. 4, FIG. 5, and/or FIG. 6.

In some embodiments, the task that is requested to be approved includes at least one selected from a group consisting of accessing a resource, creating a resource, interfacing with a network, and deploying a resource. In some embodiments, the method further includes: receiving, by a service application, one or more task arguments for the task; generating the task identifier for the task, the task identifier corresponding to the one or more task arguments; decomposing the task into the one or more subtasks; and providing the task identifier and the one or more subtasks to an approvals application. In some embodiments, the one or more approval policies are only applied at a subtask level.

In some embodiments, at least one subtask of the one or more subtasks includes a version. In some embodiments, the method further includes: changing the version of the subtask; and invalidating the approval of the task, based on the version of the subtask of the task being changed. In some embodiments, the method further includes: in response to the approval of the task, performing the task. In some embodiments, the method further includes: in response to outputting the indication of the approval, receiving, from a service application, one or more results of performing the task. In some embodiments, the one or more results of performing the task include an indication of created resources.

According to certain embodiments, a system for managing task approvals is provided. In some examples, the system includes one or more processors, and one or more memories storing instructions that, when executed by the one or more processors, cause the system to perform a set of operations. In some examples, the set of operations include: receiving a task identifier for a task that is requested to be approved, and one or more subtasks decomposed from the task, and generating a task request including a task request identifier. In some examples, the task request is associated with the task, the task request identifier corresponds to the task identifier, and each subtask of the one or more subtasks of the task corresponds to one or more approval policies. In some examples, the set of operations further includes: determining, for each subtask of the one or more subtasks of the task, whether the one or more approval policies are satisfied, in response to determining that, for each subtask of the one or more subtasks of the task, the one or more approval policies are satisfied, approving the task, and outputting an indication of the approval. For example, the system is implemented according to at least FIG. 1, FIG. 2, FIG. 3, FIG. 4, FIG. 5, FIG. 6, and/or FIG. 8.

In some embodiments, the task that is requested to be approved includes at least one selected from a group consisting of accessing a resource, creating a resource, interfacing with a network, and deploying a resource. In some embodiments, the set of operations further includes: receiving, by a service application, one or more task arguments for the task; generating the task identifier for the task, the task identifier corresponding to the one or more task arguments; decomposing the task into the one or more subtasks; and providing the task identifier and the one or more subtasks to an approvals application. In some embodiments, the one or more approval policies are only applied at a subtask level.

In some embodiments, at least one subtask of the one or more subtasks includes a version. In some embodiments, the set of operations further includes: changing the version of the subtask; and invalidating the approval of the task, based on the version of the subtask of the task being changed. In some embodiments, the set of operations further includes: in response to the approval of the task, performing the task. In some embodiments, the set of operations further includes: in response to outputting the indication of the approval, receiving, from a service application, one or more results of performing the task. In some embodiments, the one or more results of performing the task include an indication of created resources.

According to certain embodiments, a method for managing task approvals is provided. In some examples, the method includes receiving, by a service application, one or more task arguments for a task that is requested to be approved, and generating a task identifier for the task. In some examples, the task identifier corresponds to the one or more task arguments. In some examples, the method further includes decomposing the task into one or more subtasks, and generating a task request including a task request identifier. In some examples, the task request is associated with the task, the task request identifier corresponds to the task identifier, and each subtask of the one or more subtasks of the task correspond to one or more approval policies. In some examples, the method further includes determining, for each subtask of the one or more subtasks of the task, whether the one or more approval policies are satisfied, in response to determining that, for each subtask of the one or more subtasks of the task, the one or more approval policies are satisfied, approving the task, in response to the approving of the task, performing the task. The method is performed using one or more processors. For example, the method is implemented according to at least FIG. 1, FIG. 2, FIG. 3, FIG. 4, FIG. 5, and/or FIG. 6.

In some embodiments, the task that is requested to be approved includes at least one selected from a group consisting of accessing a resource, creating a resource, interfacing with a network, and deploying a resource. In some embodiments, the one or more approval policies are only applied at a subtask level. In some examples, at least one subtask of the one or more subtasks includes a version, and the method further includes: changing the version of the subtask; and invalidating the approval of the task, based on the version of the subtask of the task being changed.

For example, some or all components of various embodiments of the present disclosure each are, individually and/or in combination with at least another component, implemented using one or more software components, one or more hardware components, and/or one or more combinations of software and hardware components. In an example, some or all components of various embodiments of the present disclosure each are, individually and/or in combination with at least another component, implemented in one or more circuits, such as one or more analog circuits and/or one or more digital circuits. In an example, while the embodiments described above refer to particular features, the scope of the present disclosure also includes embodiments having different combinations of features and embodiments that do not include all of the described features. In an example, various aspects of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations, one or more features from a combination can in some cases be removed from the combination, and a combination may, for example, be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method for managing task approvals, the method comprising:
receiving a task identifier for a task that is requested to be approved, and one or more subtasks decomposed from the task;
generating a task request including a task request identifier, the task request being associated with the task, the task request identifier corresponding to the task identifier, and each subtask of the one or more subtasks of the task corresponding to one or more approval policies;
determining, for each subtask of the one or more subtasks of the task, whether the one or more approval policies are satisfied;
in response to determining that, for each subtask of the one or more subtasks of the task, the one or more approval policies are satisfied, approving the task; and
outputting an indication of the approval,
wherein the method is performed by one or more processors.

2. The method of claim 1, wherein the task that is requested to be approved includes at least one selected from a group consisting of accessing a resource, creating a resource, interfacing with a network, and deploying a resource.

3. The method of claim 1 or claim 2, further comprising:
receiving, by a service application, one or more task arguments for the task;
generating the task identifier for the task, the task identifier corresponding to the one or more task arguments;
decomposing the task into the one or more subtasks; and
providing the task identifier and the one or more subtasks to an approvals application.

4. The method of any preceding claim, wherein the one or more approval policies are only applied at a subtask level.

5. The method of any preceding claim, wherein at least one subtask of the one or more subtasks includes a version, and wherein the method further includes:
changing the version of the subtask; and
invalidating the approval of the task, based on the version of the subtask of the task being changed.

6. The method of any preceding claim, further comprising:
in response to the approval of the task, performing the task.

7. The method of any preceding claim, further comprising:
in response to outputting the indication of the approval, receiving, from a service application, one or more results of performing the task.

8. The method of claim 7, wherein the one or more results of performing the task include an indication of one or more created resources.

9. A system for managing task approvals, the system comprising:
one or more processors; and
one or more memories storing instructions that, when executed by the one or more processors, cause the system to perform the method of any of claims 1 to 8.

10. A method for managing task approvals, the method comprising:
receiving, by a service application, one or more task arguments for a task that is requested to be approved;
generating a task identifier for the task, the task identifier corresponding to the one or more task arguments;
decomposing the task into one or more subtasks; and
generating a task request including a task request identifier, the task request being associated with the task, the task request identifier corresponding to the task identifier, and each subtask of the one or more subtasks of the task corresponding to one or more approval policies;
determining, for each subtask of the one or more subtasks of the task, whether the one or more approval policies are satisfied;
in response to determining that, for each subtask of the one or more subtasks of the task, the one or more approval policies are satisfied, approving the task; and
in response to the approving of the task, performing the task,
wherein the method is performed by one or more processors.

11. The method of claim 10, wherein the task that is requested to be approved includes at least one selected from a group consisting of accessing a resource, creating a resource, interfacing with a network, and deploying a resource.

12. The method of claim 10 or claim 11, wherein the one or more approval policies are only applied at a subtask level.

13. The method of any of claims 10 to 12, wherein at least one subtask of the one or more subtasks includes a version, and wherein the method further includes:
changing the version of the subtask; and
invalidating the approval of the task, based on the version of the subtask of the task being changed.
